# EUROPÄISCHE PATENTANMELDUNG

(11) **EP 3 944 971 A1**
(43) Veröffentlichungstag der Anmeldung: **02.02.2022**
(21) Anmeldenummer: 20188211.5
(22) Anmeldetag: 28.07.2020
(51) Int. Cl.: B60D 1/64, B60Q 1/30

(54) **ANHÄNGERANSCHLUSSGERÄT MIT ERWEITERTER ANSTEUERUNGSOPTION**

(71) Anmelder: ConWys AG, 6023 Rothenburg (CH)
(72) Erfinder: Wystron, Alexander, 6005 Luzern (CH)
(74) Vertreter: Brinkmann & Partner

(57) **Zusammenfassung**

Die Erfindung betrifft ein Anhängeranschlussgerät zur elektrischen und elektronischen Anbindung eines Anhängers an ein Fahrzeug, umfassend einen Schaltungsaufbau mit einer Schnittstelle zur Verbindung mit einem fahrzeugseitigen Daten-Bus-System und einer prozessorbasierten Steuerung von elektrischen Funktionen des Anhängers, dadurch gekennzeichnet, dass die Steuerung eine Bluetooth-Schnittstelle aufweist.

## Beschreibung

Die Erfindung betrifft ein Anhängeranschlussgerät zur elektrischen und elektronischen Anbindung eines Anhängers an ein Fahrzeug, umfassend einen Schaltungsaufbau mit einer Schnittstelle zur Verbindung mit einem fahrzeugseitigen Daten-Bus-System, insbesondere einem CAN-Bus-System, und einer prozessorbasierten Steuerung von elektrischen Funktionen des Anhängers.

Anhängeranschlussgeräte der vorgenannten, das heißt gattungsgemäßen Art sind aus dem Stand der Technik an sich bekannt, so zum Beispiel aus der EP 1 702 802 A1, der EP 1 886 848 A1, der EP 1 967 393 A1 und der EP 2 374 637 A1. Es handelt sich in der Regel um ein Anhängeranschlussgerät mit einem Gehäuse, einer innerhalb des Gehäuses angeordneten elektronischen Schaltung und einer Anschlusskontakteinheit zum Anschließen elektrischer Komponenten eines Anhängers, eines Fahrradheckträgers und/oder dergleichen.

Anhängeranschlussgeräte dienen im Allgemeinen dazu, eine elektrische Anlage eines an einem Zugfahrzeug angekoppelten Anhängers oder Fahrradheckträgers in durch das Zugfahrzeug vorgebbarer Weise zu steuern. Dabei kann die elektrische Anlage des Anhängers oder des Fahrradheckträgers eine Mehrzahl unterschiedlicher elektrischer Komponenten umfassen. Derartige elektrische Komponenten betreffen insbesondere die Beleuchtung, das heißt beispielsweise die Rückleuchten, die Bremsleuchten und/oder dergleichen Leuchten. Andere elektrische Komponenten, insbesondere eines Anhängers können eine Klimaanlage, eine Heizung und/oder dergleichen elektrische Verbraucher sein, die gleichfalls mittels des Anhängeranschlussgerätes in vorgebbarer Weise angesteuert werden. Zum Anhänger oder Fahrradträger besteht eine elektrische Verbindung. Auf Seiten des Zugfahrzeuges ist das Anhängeranschlussgerät über eine Daten-Bus-Verbindung, beispielsweise eine CAN-Bus-Verbindung mit der Steuerung des Fahrzeuges verbunden. Es ist so eine digitale Datenverbindung gegeben.

Anhängeranschlussgeräte der gattungsgemäßen Art können herstellerseitig ab Werk im Zugfahrzeug installiert sein. Eine Alternative ist die Nachrüstung, weshalb gattungsgemäße Anhängeranschlussgeräte auch als Bestandteil sogenannter Nachrüstsätze erhältlich sind. Derartige Nachrüstsätze beinhalten neben einem Anhängeranschlussgerät die aus einzelnen Kabelsträngen gebildete Verkabelung, die anwenderseitig zu installieren und insbesondere an das zugfahrzeugseitige Bordnetz anzuschließen ist. Dabei verfügen die aus dem Stand der Technik vorbekannten Anhängeranschlussgeräte zumindest über eine Anschlusskontakteinheit, die der elektrischen Verbindung des Anhängeranschlussgerätes mit dem anhängerseitigen Bordnetz dient. In aller Regel ist die Anschlusskontakteinheit nach Art einer Steckdose ausgebildet, die im endfertig montierten Zustand einen hierzu korrespondierend ausgebildeten Stecker eines zum Anhänger reichenden Kabelstrangs aufnimmt.

Für den bestimmungsgemäßen Anschluss eines Anhängers an ein Zugfahrzeug bedarf es zum einen einer mechanischen Verbindung sowie zum anderen einer elektrischen Verbindung. Die mechanische Verbindung erfolgt in der Regel über eine anhängerseitige Deichsel einerseits und einer zugfahrzeugseitigen Anhängerkupplung andererseits. Die elektrische Verbindung erfolgt durch eine steckbare Kabelverbindung. Es sind insofern das sogenannte Bordnetz auf der einen Seite und das sogenannte Anhängernetz auf der anderen Seite zu unterscheiden. Zwecks lösbarer elektrischer Verbindung ist zugfahrzeugseitig zumeist eine Anhängersteckdose vorgesehen, in die im bestimmungsgemäßen Verwendungsfall ein anhängerseitiger Stecker eines Anschlusskabels gesteckt ist. Typischerweise sind die Steckdose und der Stecker 13-polig ausgeführt, es gibt aber auch 7-polige Varianten.

Gemäß einer gesetzlichen Vorschrift ist vorgesehen, dass bei einer verwenderseitigen Bedienung des Bremspedals die Bremsleuchten sowohl am Zugfahrzeug als auch am Anhänger aufleuchten müssen. Selbiges gilt für Blinker. Bei Nebelschlussleuchten sieht dies anders aus. So sieht die gesetzliche Vorschrift vor, dass in einem Fahrzeugzug nur die Nebelschlussleuchten am letzten Anhänger zu leuchten brauchen. Die Abschaltung der Nebelschlussleuchten am Zugfahrzeug oder an einem ersten Anhänger ist aber nur dann zulässig, wenn die jeweilige Ab- bzw. Wiedereinschaltung selbsttätig durch Aufstecken bzw. Abziehen des Steckers für die Anhängerbeleuchtung erfolgt.

Diese beispielhaften Standardfunktionen sind überlagert von in der Praxis auftretenden nicht einheitlichen Zusammenstellungen. So muss es beispielsweise möglich sein, ein mit LEDs betriebenes Zugfahrzeug mit einem Anhänger mit herkömmlichen Glühbirnen kombinieren zu können. Selbiges natürlich auch umgekehrt. Weitere Praxisprobleme sind beispielsweise, dass das Zugfahrzeug über zwei Nebelschlussleuchten, der Anhänger aber nur über eine Nebelschlussleuchte verfügt. Ferner ist es gewünscht, dass bei einem Ausfall der elektrischen Anlage des Anhängers der Führer des Zugfahrzeuges entsprechend informiert wird. Das Anhängeranschlussgerät muss also in der Lage sein, eine Kontrollleuchte im Zugfahrzeug aufleuchten zu lassen.

Anhängeranschlussgeräte gibt es sowohl für analoge Ausrüstungen, wie auch für digitale Kommunikation. Das hier in Rede stehende Anhängeranschlussgerät betrifft eine digitale Ausführungsform und wird wie ausgeführt an den sogenannten CAN-Bus des Kraftfahrzeugs angeschlossen. Über das Anhängeranschlussgerät findet mithin nicht nur eine Stromversorgung für das Anhängernetz statt, sondern es ist auch eine Kommunikation zwischen Zugfahrzeug und Anhänger ermöglicht, was es insbesondere gestattet, den Verwender mit Informationen zu versorgen, beispielsweise über die Funktionstüchtigkeit der elektrischen Verbindung, der Funktionstüchtigkeit der elektrischen Lage des Anhängers, die richtige oder falsche Anschlusswahl und dergleichen mehr.

Sowohl für den Fall der Erstausstattung als auch für den Fall der Nachrüstung wird an die Anhängeranschlussgeräte die Anforderung gestellt, dass diese denkbar einfach aufgebaut und montierbar sind. Sie sollen darüber hinaus möglichst geringen Bauraum beanspruchen, um in beliebige Fahrzeuge an möglichst hinsichtlich der Kabelverlegung praktischen Positionen eingebaut werden zu können. Ferner sollen die Anhängeranschlussgeräte möglichst flexibel hinsichtlich der elektronischen und elektrischen Anpassung sein, um zum einen an die unterschiedlichen Gegebenheiten bei Nachrüstungen angepasst werden zu können und um zum anderen auch für neue Funktionalitäten geeignet zu sein. Aus dem Stand der Technik bekannte Anhängeranschlussgeräte sind diesbezüglich wenig variabel und nur schwer anpassbar. Insbesondere aus Gründen vertretbarer Fertigungskosten ist die bauliche, elektrische und elektronische Auslegung bekannter Anhängeranschlussgeräte starr.

Ausgehend vom vorbeschriebenen Stand der Technik liegt der Erfindung die **Aufgabe** zugrunde, ein Anhängeranschlussgerät der gattungsgemäßen Art dahingehend zu verbessern, dass dieses hinsichtlich der elektrischen und elektronischen Auslegung und Anpassung variabler ist und Erweiterungsmöglichkeiten bietet.

Zur technischen **Lösung** dieser Aufgabe wird ein Anhängeranschlussgerät mit den Merkmalen des Patentanspruches 1 vorgeschlagen. Weitere Vorteile und Merkmale ergeben sich aus den Unteransprüchen.

Erfindungsgemäß weist die Steuerung eine Bluetooth Schnittstelle auf. Unter Bluetooth Schnittstelle im Sinne der vorliegenden Erfindung wird eine entsprechende Sende-/Empfangsschaltung verstanden, insbesondere im Sinne des von der Bluetooth Special Interest Group (SIG) entwickelten Industriestandards für die Datenübertragung zwischen Geräten über kurze Distanz per Funktechnik (WPAN).

Die Erfindung gestattet es, auf das Anhängeranschlussgerät mittels Bluetooth zugreifen zu können. Diese Ausgestaltung ermöglicht eine Vielzahl von Bedienoptionen. Zum einen kann beispielsweise die Erstausrüstung beziehungsweise Initialisierung des Anhängeranschlussgeräts in vereinfachter Weise durchgeführt werden, indem dies über ein mobiles Endgerät erfolgt. Sofern dies mit einer auf dem Endgerät installierten App erfolgt, ist insbesondere die Erstingebrauchnahme des Anhängeranschlussgeräts deutlich vereinfacht. Des Weiteren gestattet es die Bluetooth-Schnittstelle, das Anhängeranschlussgerät im bestimmungsgemäßen Verwendungsfall überprüfen zu können. Dies ist insbesondere im Fehlerfall von Vorteil, weil der Verwender dann sehr viel einfacher in die Lage versetzt wird, den beispielsweise im Cockpit des Zugfahrzeugs nur durch eine Leuchtdiode angezeigten Fehler konkreter zu identifizieren, um dann entweder sofortige Abhilfe leisten oder einen Reparaturdienst informieren zu können.

Gemäß einem Vorschlag der Erfindung ist bei einem Anhängeranschlussgerät zur elektrischen und elektronischen Anbindung eines Anhängers an ein Fahrzeug, umfassend einen Schaltungsaufbau mit einer Schnittstelle zur Verbindung mit einem fahrzeugseitigen Daten-Bus-System, insbesondere einem CAN-Bus-System, und einer prozessorbasierten Steuerung von elektrischen Funktionen des Anhängers, vorgesehen, dass der Schaltungsaufbau wenigstens zwei getrennte und über eine Schnittstelle verbindbare Schaltungsbaugruppen umfasst. Dabei ist vorgesehen, dass eine der Schaltungsbaugruppen als Hauptplatine mit einer prozessorbasierten Steuerung und wenigstens eine weitere als Zusatzplatine ausgelegt sind, welche Zusatzplatine die Funktionalität der Hauptplatine erweitert.

Entsprechend kann eine externe Antenne vorgesehen sein. Hierfür kann ein U.FL Connector am jeweiligen Modul vorgesehen sein.

Gemäß der Erfindung kann die Bluetooth-Schnittstelle auf der Hauptplatine oder auf einer Zusatzplatine angeordnet sein. Damit ist es möglich, Informationen über Bluetooth auf bluetoothfähige Geräte zu übertragen, beispielsweise auf ein mobiles Endgerät, insbesondere ein Smartphone zum Zwecke der Anzeige, Warnung und dergleichen. Weiterhin wird vorgeschlagen, dass wenigstens eine der Zusatzplatinen eine Schnittstelle zur akustischen Signalausgabe aufweist. Auch dies dient der Abgabe von Warnsignalen oder Funktionsbestätigungen.

Der die Schaltungsaufteilung betreffende Aspekt der Erfindung besteht ebenfalls darin, die fahrzeugspezifische Ausrüstung eines Anhängeranschlussgeräts einfacher zu gestalten. Es sind zu diesem Zweck nach dem Baukastenprinzip miteinander kombinierbare Platinen vorgesehen. Dies umfasst eine Hauptplatine, die dazu dient, die Grundfunktionen eines Anhängeranschlussgeräts bereitzustellen, das heißt vorzugsweise die gesetzlich vorgeschriebenen Grundfunktionen. Dabei kann es sein, dass nicht alle notwendigen Grundfunktionen zu einer Hauptplatine zusammengefasst werden, sondern nur solche, die eine Verwendung der so ausgerüsteten Hauptplatine für eine große Anzahl möglicher Zugfahrzeuge gestattet.

An die Hauptplatine können dann wahlweise Zusatz-, d.h. Nebenplatinen angeschlossen sein. Eine erste Nebenplatine könnte eine solche sein mit Grundfunktionen, wobei aber in Nebenplatinen nur solche Grundfunktionen gebündelt sind, die fahrzeugspezifisch unterschiedliche Platinen erforderlich machen. In diesem Fall sieht jedes Anhängeranschlussgerät eine Hauptplatine und eine Nebenplatine vor, wobei die Nebenplatine immer fahrzeugtypisch ausgewählt ist.

Alternativ oder in Kombination hierzu sind weitere Nebenplatinen vorgesehen, die im Sinne einer Aufrüstung Wunschfunktionalitäten bereitstellen. Dem Verwender ist es somit gestattet, neben den Muss-Funktionen auch Kann-Funktionen zu wählen, wobei entweder kundenseitig oder herstellerseitig die hierfür erforderlichen Platinen zusammengestellt und miteinander kontaktiert werden.

Eine schaltungstechnische Realisierung kann ein Mainboard umfassen, auf das Nebenplatinen aufzustecken sind, wobei Nebenplatinen sowohl solche mit Grundfunktionen als auch mit Zusatzfunktionen sein können.

Es sind mithin eine Mehrzahl von Zusatzplatinen vorgesehen sind, die nach dem Baukastenprinzip mit der Hauptplatine kombinierbar sind. Nach dem "Baukastenprinzip" im Sinne der Erfindung meint dabei ein System aus einer Hauptplatine und mehreren Zusatzplatinen, wobei die Hautplatine für sich funktionstüchtig ist und in ihrer Funktionalität um die Funktionalitäten der Zusatzplatinen ergänzt werden kann, wobei die Zusatzplatinen seitens eines Verwenders wahlweise mit der Hauptplatine kombinierbar sind.

Gemäß einem vorteilhaften Vorschlag der Erfindung können die Zusatzplatinen über SMT-Stiftleisten mit der Hauptplatine verbunden sein. Diese Technologie ermöglicht eine kostengünstige und flexible Entwicklung von Zusatzplatinen. Dies wird dadurch ergänzt, dass gemäß einem weiteren vorteilhaften Vorschlag der Erfindung die prozessorbasierte Steuerung der Hauptplatine die Funktionalität der Zusatzplatinen einbindet.

Gemäß einem weiteren vorteilhaften Vorschlag der Erfindung ist vorgesehen, dass die Schnittstellen, beispielsweise die SMT-Stiftleisten mit einer Positionierkodierung ausgerüstet sind. Es ist so einer Verpolung von Hauptplatine und Zusatzplatine, d.h. einem falschen Zusammenstecken von Zusatzplatine und Hauptplatine sicher vorgebeugt. Dabei kann die Positionierkodierung einerseits sicherstellen, dass eine Zusatzplatine nicht an einen für eine andere Zusatzplatine vorgesehenen Steckplatz gesteckt wird sowie andererseits, dass eine Zusatzplatine zwar einem richtigen Steckplatz zugeordnet ist, in ihrer Ausrichtung aber nicht falsch herum aufgesteckt wird.

Zur Erhöhung der Kompatibilität mit neuartigen Fahrzeugsteuerungen wird vorgeschlagen, dass die Hauptplatine über eine LIN-Bus Anbindung verfügt.

Weiterhin befassen sich weitere vorteilhafte Vorschläge der Erfindung mit konkreten Ergänzungen und Erhöhungen der Sicherheit. So wird in diesem Rahmen vorgeschlagen, dass die Hauptplatine über einen Signalgenerator zur Ausgabe akustischer Signale verfügt. Gemäß einem weiteren Vorschlag verfügt das Anhängeranschlussgerät auf der Hauptplatine über einen elektrischen Anschluss, der gegen Verpolung gesichert ist. Dadurch wird die Montage erleichtert und sicherer.

In vorteilhafter Weise sind die Haupt- und Zusatzplatinen in einem Gehäuse integriert. Somit kann insbesondere bei Einrüstungen von einer definierten Bauteilform ausgegangen werden.

Gemäß einem weiteren vorteilhaften Vorschlag der Erfindung ist vorgesehen, dass wenigstens eine der Zusatzplatinen eine Schaltung zur Überwachung der Stromabnahme durch den Anhänger aufweist. Dadurch können unterschiedliche Konstellationen detektiert werden, beispielsweise fehlerhafte Stromflüsse, obwohl kein Anhänger vorhanden ist und dergleichen.

Weiterhin wird vorgeschlagen, dass wenigstens eine der Zusatzplatinen eine Simulationsschaltung mit einem elektrischen Verbraucher für einen Betrieb von Nebelschlussleuchten aufweist. Bei dem Verbraucher kann es sich beispielsweise um einen Widerstand handeln. Aber auch eine Schaltung für eine Rückspeisung zur Batterie des Zugfahrzeugs ist möglich und in besonderer Weise vorteilhaft, weil ein unnötiger Stromverbrauch vermieden ist.

Mit der Erfindung wird eine mit überschaubarem wirtschaftlichem Aufwand erstellbare Lösung vorgeschlagen, durch welche Anhängeranschlussgeräte deutlich flexibler an fahrzeugspezifische oder auf neue Entwicklungen basierende Besonderheiten anpassbar sind. Weitere Merkmale und Vorteile der Erfindung ergeben sich aus der nachfolgenden Beschreibung anhand der Figuren. Dabei zeigen
- Fig. 1: in rein schematischer Darstellung eine beispielhafte Schaltung für eine Hauptplatine nach der Erfindung;
- Fig. 2: in rein schematischer Darstellung eine beispielhafte Schaltung für eine Zusatzplatine nach der Erfindung;
- Fig. 3: in schematischer perspektivischer Ansicht ein Beispiel für eine Schaltungsanordnung nach der Erfindung und
- Fig. 4: in schematischer Seitenansicht ein zweites Beispiel für eine Schaltungsanordnung nach der Erfindung.

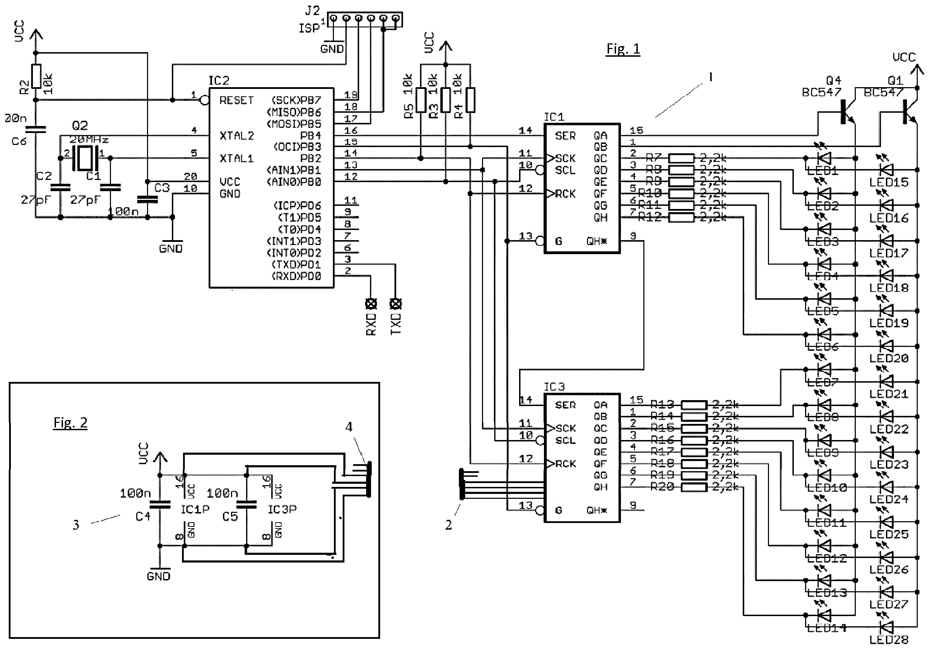

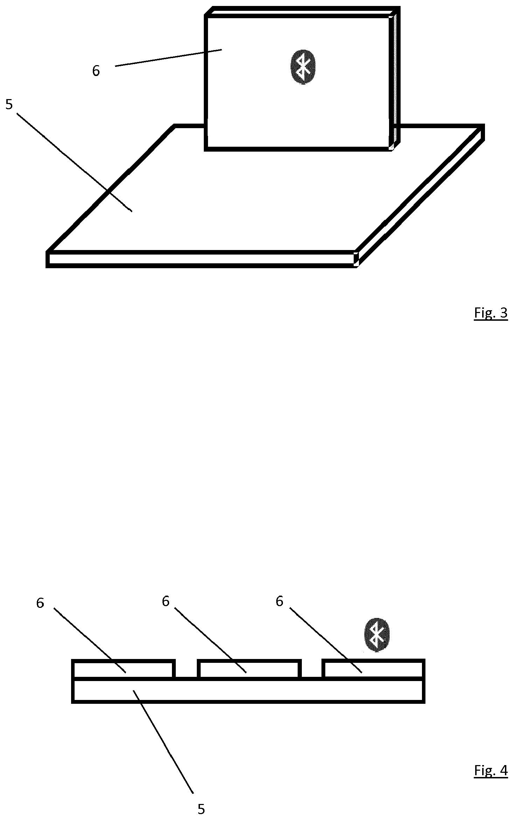

Beispielhaft sind in den Figuren 1 und 2 willkürliche Schaltungen 1 und 3 gezeigt. Die Schaltungsanordnungen selbst in Bezug auf ihren elektrischen/elektronischen Aufbau sind für die Erläuterung der vorliegenden Erfindung nicht von Bedeutung. Wesentlich ist, dass die als Steuerschaltung 1 ausgelegte Hauptplatine 5 (Fig. 3) ein Kontaktfeld 2 aufweist, welches entsprechend geschaltet ist. Die in Figur 2 gezeigte Funktionsschaltung 3 weist ihrerseits ein entsprechend geschaltetes Kontaktfeld 4 auf. Durch die Verbindung der Kontaktfelder 2 und 4 kann nun die Zusatzplatine 6 (Fig. 3) in Form der Funktionsschaltung 3 mit der Hauptplatine 5 in Form der Steuerschaltung 1 verbunden werden. Geht man davon aus, dass die Steuerschaltung 1 Grundfunktionalitäten bereitstellt, kann die Funktionsschaltung 3 optionale Zusatzfunktionalitäten bereitstellen, die die Funktionalitäten der Hauptplatine 5 entsprechend erweitern.

Es versteht sich von selbst, dass die Steuerschaltung 1 eine beliebige Anzahl entsprechend geschalteter Kontaktfelder 2 aufweisen kann, sodass eine entsprechende Anzahl von Funktionsschaltungen ergänzt werden kann. Auf diese Weise kann modular ein Gesamtsystem geschaffen werden, das die gewünschten Funktionalitäten aufweist.

Für die Verbindung der Kontaktfelder 2 und 4, die beispielhaft gezeigt sind, gibt es eine Vielzahl von bekannten Möglichkeiten. Entsprechende Kabelverbindungen, beispielsweise flach ausgeführte Kabelbänder, mit entsprechenden standardisierten oder individuell ausgebildeten Steckern/Steckfeldern können ebenso zum Einsatz kommen wie direkt an der Schaltung ausgeführte Kontaktfelder, die beispielsweise ein Einstecken einer Funktionsschaltung 3 in Form einer Zusatzplatine 6 in eine Hauptplatine 5 ermöglichen, wie dies beispielhaft in Figur 3 angedeutet ist. Die Kontaktfelder können Kontaktleisten aufweisen, die vorzugsweise eine Positionierkodierung aufweisen, so dass einer Verpolung, d.h. einem falschen Zusammenstecken von Zusatzplatinen 6 und Hauptplatine 5 sicher vorgebeugt ist. Dabei kann die Positionierkodierung einerseits sicherstellen, dass eine Zusatzplatine 6 nicht an einen für eine andere Zusatzplatine 6 vorgesehenen Steckplatz gesteckt wird sowie andererseits, dass eine Zusatzplatine 6 zwar einem richtigen Steckplatz zugeordnet ist, in ihrer Ausrichtung aber nicht falsch herum aufgesteckt wird.

Im gezeigten Ausführungsbeispiel ist die in Figur 3 auf die Hauptplatine 5 aufgesetzte Zusatzplatine 6 als Bluetooth-Schnittstelle ausgelegt, die der Steuerung ihre Funktionalität zur Verfügung stellt. Dies gestattet es insbesondere einem Verwender, auf das Anhängeranschlussgerät in einfacher Weise mittels eines mobilen Endgeräts zugreifen zu können. Dies ermöglicht eine vereinfachte Erstinstallation des Anhängeranschlussgeräts und gestattet es zudem, während eines bestimmungsgemäßen Betriebs des Anhängeranschlussgeräts auf dieses zugreifen und Daten bzw. Informationen abfragen bzw. anzeigen lassen zu können.

Ein weiteres Ausführungsbeispiel zeigt Figur 4 in schematischer Seitenansicht. Gemäß dieser Ausführungsform ist eine Hauptplatine 5 vorgesehen, die mit drei Zusatzplatinen 6 bestückt ist. Die in Zeichnungsebene nach Figur 4 rechte Zusatzplatine 6 verfügt über eine Bluetooth-Schnittstelle. Der in Figur 4 gezeigte Aufbau ist im Unterschied zum Aufbau nach Figur 3 sandwichartig, wobei die Hauptplatine 5 als Trägerplatine für die Zusatzplatinen 6 dient. Dabei sind die Hauptplatine 5 und die Zusatzplatinen 6 jeweils horizontal ausgerichtet und bezüglich ihrer jeweiligen Großseiten einander zugewandt. Hierdurch ergibt sich der sandwichartige Aufbau, der in seiner Ausgestaltung vergleichsweise flach ist, was eine Unterbringung in auch engen Bauräumen ermöglicht. Der sandwichartige Aufbau hat zudem den positiven Effekt, dass eine mechanische Stabilität gegeben ist, da sich die Platinen 5 bzw. 6 bei einer mechanischen Kraftbeaufschlagung gegenüber einander abstützen können. Die Funktionalitäten der Zusatzplatinen 6 ergänzen die Grundfunktionalität der Hauptplatine 5, wobei die Zusatzplatinen 6 beispielsweise die Funktionalitäten einer Stromüberwachung, d.h. einer voltage control, oder einer Simulationsschaltung für einen ordnungsgemäßen Betrieb von Nebelschlussleuchten bereitstellen können.

Die vorstehend aufgeführten Beispiele sind lediglich als Erläuterung und nicht einschränkend zu verstehen. Es können selbstredend auch andere Schaltungsverbindungen und -Anordnungen eingesetzt werden, ebenso wie die Bluetooth-Schnittstelle auf der Hauptplatine direkt realisiert werden kann.

### Bezugszeichen

- 1: Steuerschaltung
- 2: Kontaktfeld
- 3: Funktionsschaltung
- 4: Kontaktfeld
- 5: Hauptplatine
- 6: Zusatzplatine

## Patentansprüche

1. Anhängeranschlussgerät zur elektrischen und elektronischen Anbindung eines Anhängers an ein Fahrzeug, umfassend einen Schaltungsaufbau mit einer Schnittstelle zur Verbindung mit einem fahrzeugseitigen Daten-Bus-System und einer prozessorbasierten Steuerung von elektrischen Funktionen des Anhängers, **dadurch gekennzeichnet, dass** die Steuerung eine Bluetooth-Schnittstelle aufweist.

2. Anhängeranschlussgerät nach Anspruch 1, **dadurch gekennzeichnet, dass** die Bluetooth-Schnittstelle in die Steuerungsschaltung integriert ist.

3. Anhängeranschlussgerät nach einem der vorhergehenden Ansprüche, **dadurch gekennzeichnet, dass** der Schaltungsaufbau wenigstens zwei getrennte und über eine Schnittstelle verbindbare Schaltungsbaugruppen umfasst.

4. Anhängeranschlussgerät nach Anspruch 3, **dadurch gekennzeichnet, dass** eine der Schaltungsbaugruppen als Hauptplatine (5) mit einer prozessorbasierten Steuerung und wenigstens eine weitere als Zusatzplatine (6) ausgelegt sind, welche Zusatzplatine (6) die Funktionalität der Hauptplatine erweitert.

5. Anhängeranschlussgerät nach einem der vorhergehenden Ansprüche, **dadurch gekennzeichnet, dass** wenigstens eine der Zusatzplatinen (6) die Bluetooth-Schnittstelle aufweist.

6. Anhängeranschlussgerät nach Anspruch 4 oder 5, **dadurch gekennzeichnet, dass** eine Mehrzahl von Zusatzplatinen (6) vorgesehen sind, die nach dem Baukastenprinzip mit der Hauptplatine (5) kombinierbar sind.

7. Anhängeranschlussgerät nach Anspruch 6, **dadurch gekennzeichnet, dass** die Zusatzplatinen (6) über definierte Schnittstellen mit der Hauptplatine (5) verbindbar sind.

8. Anhängeranschlussgerät nach Anspruch 7, **dadurch gekennzeichnet, dass** die Schnittstellen mit einer Positionierkodierung ausgerüstet sind.

9. Anhängeranschlussgerät nach einem der vorhergehenden Ansprüche, **dadurch gekennzeichnet, dass** die Hauptplatine (5) über einen Signalgenerator zur Ausgabe akustischer Signale verfügt.

10. Anhängeranschlussgerät nach einem der vorhergehenden Ansprüche, **dadurch gekennzeichnet, dass** dieses auf der Hauptplatine (5) über einen elektrischen Anschluss verfügt, der gegen Verpolung gesichert ist.

11. Anhängeranschlussgerät nach einem der vorhergehenden Ansprüche, **dadurch gekennzeichnet, dass** die Haupt- und Zusatzplatinen (5, 6) in einem Gehäuse integriert sind.

12. Anhängeranschlussgerät nach einem der vorhergehenden Ansprüche, **dadurch gekennzeichnet, dass** wenigstens eine der Zusatzplatinen (6) eine Schnittstelle zur akustischen Signalausgabe aufweist.

13. Anhängeranschlussgerät nach einem der vorhergehenden Ansprüche, **dadurch gekennzeichnet, dass** wenigstens eine der Zusatzplatinen (6) eine Schaltung zur Überwachung der Stromabnahme durch den Anhänger aufweist.

14. Anhängeranschlussgerät nach einem der vorhergehenden Ansprüche, **dadurch gekennzeichnet, dass** wenigstens eine der Zusatzplatinen (6) eine Simulationsschaltung mit einem elektrischen Verbraucher für einen Betrieb von Nebelschlussleuchten aufweist.

15. Anhängeranschlussgerät nach Anspruch 14, **dadurch gekennzeichnet, dass** der elektrische Verbraucher hinsichtlich seiner Stromabnahme einstellbar ausgebildet ist.

16. Anhängeranschlussgerät nach Anspruch 14 oder 15, **dadurch gekennzeichnet, dass** der elektrische Verbraucher eine Schaltung zur Rückspeisung aufweist.
